# EUROPÄISCHE PATENTSCHRIFT

(11) **EP 0 738 136 B1**
(45) Veröffentlichungstag und Bekanntmachung des Hinweises auf die Patenterteilung: **15.04.1998**
(21) Anmeldenummer: 95905039.4
(22) Anmeldetag: 04.01.1995
(51) Int. Cl.: A61J 3/10, B30B 11/02, B30B 11/08

(54) **VERFAHREN ZUR HERSTELLUNG VON TABLETTEN**
PROCESS FOR PRODUCING TABLETS
PROCEDE DE PRODUCTION DE COMPRIMES

(30) Priorität: 04.01.1994 DE 4400111
(43) Veröffentlichungstag der Anmeldung: 23.10.1996
(73) Patentinhaber: Voss, Gunter Meinhardt, D-86911 Diessen (DE)
(72) Erfinder: Voss, Gunter Meinhardt, D-86911 Diessen (DE)
(74) Vertreter: Münich, Wilhelm, Dr.
(86) Internationale Anmeldenummer: DE9500011
(87) Internationale Veröffentlichungsnummer: WO9518596

(56) Entgegenhaltungen:
- EP-A- 0 122 519
- EP-A- 0 336 197
- DE-C- 4 103 413
- FR-A- 2 387 764
- US-A- 3 518 343

## Beschreibung

### Technisches Gebiet

Die Erfindung bezieht sich auf ein Verfahren zur Herstellung von Tabletten unter Verwendung einer Presse, die wenigstens eine Preßkammer mit einem Ober- und Unterstempel und eine Schmiervorrichtung mit wenigstens einer Zweistoffdüse aufweist, die das Schmiermittel auf die Preßkammerwände auf einem Sprühkegel emittiert.

### Stand der Technik

Verfahren gemäß dem Oberbegriff des Patentanspruchs 1 werden häufig auf sogenannten Rundpressen ausgeführt. Bei Rundpressen sind eine Reihe von Bearbeitungsstationen vorgesehen, in denen die einzelnen für die Herstellung einer Tablette erforderlichen Bearbeitungsvorgänge ausgeführt werden.

Dies bedeutet, daß immer dann, wenn für die Herstellung einer Tablette ein weiterer Zusatzstoff zugegeben werden soll, ein Eingriff in den Aufbau der Presse erforderlich ist. Häufig ist es jedoch nicht möglich, bei einer bestehenden Presse, deren Abmessungen durch den Aufbau des Rundtisches vorgegeben sind, eine weitere Bearbeitungsstation hinzuzufügen.

Vor allem aber ist dann, wenn Zusatzstoffe, wie beispielsweise Geschmacksstoffe auf die Tablette als Film aufgebracht werden sollen, ein separater Arbeitsschritt erforderlich, der in der Regel in einer von der eigentlichen Tablettenpresse getrennten Vorrichtung ausgeführt wird.

Weiterhin ist es bekannt, derartige Verfahren mit Vorrichtungen gemäß der DE 41 03 413 C1 durchzuführen. Hierbei wird mittels einer Zweistoffdüse, die eine innere Düse und einen diese koaxial umgebenden Ringraum aufweist, Schmiermittel auf die Preßwerkzeuge einer Tablettenpresse aufgebracht.

### Darstellung der Erfindung

Der Erfindung liegt die Aufgabe zugrunde, ein Verfahren zur Herstellung von Tabletten anzugeben, bei dem Zusatzstoffe jederzeit ohne Änderung des Aufbaus der Presse zugegeben werden können.

Eine erfindungsgemäße Lösung dieser Aufgabe ist im Patentanspruch 1 angegeben. Weiterbildungen der Erfindung sind Gegenstand der Unteransprüche.

Erfindungsgemäß ist dem Schmiermittel, das auf die Preßkammerwände aufgebracht wird, wenigstens ein Zusatzstoff beigefügt. Durch diese erfindungsgemäße Maßnahme ist es ohne Eingriff in den Aufbau der Presse möglich, Zusatzstoffe, deren Dosierung exakt erfolgen muß, in die Tablette beim Herstellungsvorgang einzubringen, bzw. auf die Tablette aufzubringen.

Diese Zusatzstoffe können insbesondere Geschmackstoffe, wie beispielsweise handelsübliche Süßstoffe (Anspruch 3) sein.

Ferner ist es auch denkbar, Bitterstoffe als Zusatzstoffe in einer wasserlöslichen Zubereitung auf die Tablette aufzubringen, die Kinder von der mißbräuchlichen Einnahme der Tabletten abhalten sollen. In der Gebrauchsanweisung wäre dann ein Hinweis vorzusehen, daß die Tabletten vor der bestimmungsgemäßen Einnahme abzuwaschen wären, um somit den Bitterstoff zu entfernen.

Gemäß Anspruch 3 werden der oder die Geschmacksstoffe in einen Träger gemischt, und die Mischung dann dem Schmiermittel beigefügt.

Im Anspruch 5 ist eine bevorzugte Möglichkeit gekennzeichnet, wie der Zusatzstoff und insbesondere ein oder mehrere Geschmacksstoffe als Film auf die Oberfläche aufgebracht werden können:

Der Geschmacksstoff wird mit einem Filmbildner gemischt und dann zusammen mit dem Filmbildner dem Schmiermittel zugesetzt. Das Gemisch wird dann beispielsweise mit der in der DE 41 03 413 Cl beschriebenen Vorrichtung auf die Oberfläche oder auf ausgewählte Oberflächenbereiche der Preßkammer bzw. der aktiven Werkzeug der Preßkammer aufgebracht.

Besonders vorteilhaft ist die Möglichkeit, bei dem erfindungsgemäßen Verfahren die Zusatzstoffe in Form einer Schmelze auf die Preßkammerwände mit Hilfe wenigstens einer heizbaren Zweistoffdüse aufzutragen.

Zur Verwendung besonders geeignet ist eine Düse mit piezoelektonischem Proportionalventil in der Zufuhreinrichtung, mit dem auch bei hohen Temperaturen und hohen Drücken präzise gearbeitet werden kann.

Ein derartiges Ventil arbeitet proportional zur Ansteuerung und gewährleistet durch einstellbare Durchflußmenge und einstellbaren Querschnitt exakte Dosierung. Die Ansteuerung erfolgt vorzugsweise über einen Rechner bzw. über eine elektronische Steuereinheit, die ihre Signale beispielsweise über Sensoren für Druck und/oder Temperatur erhalten.

Zur Ausführung der Erfindung ist beispielsweise die Verwendung von Aspartam als Süßstoff, und Eudragit RL 30 D oder Sikovit Grünlack möglich.

## Patentansprüche

1. Verfahren zur Herstellung von Tabletten unter Verwendung einer Presse, die wenigstens eine Preßkammer mit einem Ober- und Unterstempel und eine Schmiervorrichtung mit wenigstens einer Zweistoffdüse aufweist, die das Schmiermittel auf die Preßkammerwände auf einem Sprühkegel emittiert,
dadurch **gekennzeichnet**, daß dem Schmiermittel wenigstens ein Zusatzstoff, der beim Herstellungsvorgang der Tabletten in diese einzubringen bzw. auf diese aufzubringen ist, beigefügt wird.

2. Verfahren nach Anspruch 1,
dadurch **gekennzeichnet**, daß der Zusatzstoff ein Geschmacksstoff ist.

3. Verfahren nach Anspruch 2,
dadurch **gekennzeichnet**, daß der Geschmacksstoff in einen Träger gemischt und dann dem Schmiermittel beigefügt wird.

4. Verfahren nach einem der Ansprüche 1 bis 3,
dadurch **gekennzeichnet**, daß der Zusatzstoff ein Süßstoff und/oder ein Bitterstoff ist.

5. Verfahren nach einem der Ansprüche 1 bis 4,
dadurch **gekennzeichnet**, daß der Zusatzstoff dadurch als Film auf die Oberfläche der Tablette aufgebracht wird, daß er mit einem Filmbildner gemischt und dann zusammen mit dem Filmbildner dem Schmiermittel zugesetzt wird.

6. Verfahren nach einem der Ansprüche 1 bis 5,
dadurch **gekennzeichnet**, daß die Zusatzstoffe in Form einer Schmelze auf die Preßkammerwände mit Hilfe wenigstens einer heizbaren Zweistoffdüse aufgetragen werden.

7. Verfahren nach einem der Ansprüche 1 bis 6,
dadurch **gekennzeichnet**, daß zur Dosierung des bzw. der Zusatzstoffe ein Proportionalventil verwendet wird, das die Dosierung des bzw. der Zusatzstoffe vor der Zweistoffdüse steuert.

## Claims

1. A process for manufacuring tablets using a press provided with at least one compression chamber having an upper and a bottom mold and a lubricating device having at least one two-substance nozzle which emits the lubricant onto the walls of said compression chamber on an atomizing cone,
**characterized by** at least one additive, which is introduced into or applied onto said tablets during said manufacturing process, being added to said lubricant.

2. A process according to claim 1,
**characterized by** said additive being a flavoring substance.

3. A process according to claim 2,
**characterized by** said flavoring substance being mixed into a carrier and then added to said lubricant.

4. A process according to one of the claims 1 to 3,
**characterized by** said additive being a sweeetener and/or a bittering agent.

5. A process according to one of the claims 1 to 4,
**characterized by** said additive being applied as a coat of film onto the surface of the tablet, by said additive being mixed with a film former and then being added to said lubricant along with said film former.

6. A process according to one of the claims 1 to 5,
**characterized by** the additives being applied in a melted state onto the walls of said compression chamber with the aid of at least one heatable two-substance nozzle.

7. A process according to one of the claims 1 to 6,
**characterized by** for dosage of said additive respectively additives, a proportional valve, which controls the dosage of said additive respectively additives before said two-substance nozzle, being utilized.

## Revendications

1. Procédé pour fabriquer des comprimés moyennant l'utilisation d'une presse, qui comporte au moins une chambre de pressage comportant un poinçon supérieur et un poinçon inférieur, et un dispositif de lubrification comportant au moins une buse délivrant deux constituants, qui envoie le fluide de lubrification sous la forme d'un cône de pulvérisation sur les parois de la chambre de pressage,
caractérisé en ce qu'on ajoute au lubrifiant au moins une substance additive qui, lors du processus de fabrication des comprimés, doit être insérée dans ces derniers ou appliquée sur ces derniers.

2. Procédé selon la revendication 1, caractérisé en ce que la substance additive est une substance donnant du goût.

3. Procédé selon la revendication 2, caractérisé en ce qu'on mélange la substance donnant du goût à un support, puis qu'on l'ajoute à la substance lubrifiante.

4. Procédé selon l'une des revendications 1 à 3, caractérisé en ce que la substance additive est une substance sucrée et/ou une substance amère.

5. Procédé selon l'une des revendications 1 à 4, caractérisé en ce qu'on applique la substance additive en tant que film sur la surface des comprimés par le fait qu'on mélange cette substance additive à un agent filmogène et qu'ensuite on l'ajoute, conjointement avec l'agent filmogène, au lubrifiant.

6. Procédé selon l'une des revendications 1 à 5, caractérisé en ce qu'on dépose les substances additives sous la forme d'une masse fondue sur les parois de la chambre de pressage à l'aide d'au moins une buse pouvant être chauffée, délivrant deux constituants.

7. Procédé selon l'une des revendications 1 à 6, caractérisé en ce que pour le dosage de la ou des substances additives on utilise une soupape à action proportionnelle, qui commande le dosage de la ou des substances additives en amont de la buse délivrant les deux constituants.
